# EUROPEAN PATENT APPLICATION

(11) **EP 2 993 600 A1**
(43) Date of publication of application: **09.03.2016**
(21) Application number: 15159752.3
(22) Date of filing: 18.03.2015
(51) Int. Cl.: G06F 17/50, G06F 17/00

(54) **METHOD FOR QUICKLY IMPLEMENTING AN INTERIOR DESIGN SCHEME**

(30) Priority: 04.09.2014 CN 201410448370
(71) Applicant: Beijing Eryiju Technology Co., Ltd, Dongdan Beijing (CN)
(72) Inventor: Yao, Jin, Dongdan Beijing (CN); Liu, Ruija, Dongdan Beijing (CN); He, Decai, Dongdan Beijing (CN); Bai, Kun, Dongdan Beijing (CN); Li, Hao, Dongdan Beijing (CN); Wang, Bo, Dongdan Beijing (CN); Zhang, Xingnan, Dongdan Beijing (CN); Fang, Xin, Dongdan Beijing (CN)
(74) Representative: Berkkam, Ayfer

(57) **Abstract**

The present invention discloses a method for quickly implementing an interior design scheme, including: step 1) design of a prototype room, dividing and setting a room into functional areas according to a type of a room, designing each of the functional areas in three sizes, that is, a large size, a medium size and a small size, and with a design style by a designer; step 2) designing a prototype room by each designer, forming the functional areas and recording them in an easily-implemented system, according to an easily-implemented protocol and rule, and in an easily-implemented computer description language, functions and formulas; step 3) transforming the designed prototype room into computer description language and formulas, and transferring it to a cloud platform, and synchronizing it to software of any hypostatic store in any place across the world; and step 4) in a hypostatic store, adjusting sizes of the functional areas, arranging positions of the functional areas and selecting a prototype room according to the type of the room, and transforming functions and formulas of a previously designed prototype room scheme into a three-dimensional stereo and presenting the three-dimensional stereo immediately by a computer.

## Description

### TECHNICAL FIELD

The present invention generally relates to a method for quickly implementing an interior design scheme.

### BACKGROUND

Interior design refers to a technique for creation of a functionally satisfying, comfortable and elegant indoor environment that meets physical and spiritual needs of inhabitants, utilizing relevant substances and techniques and principles for architectural design, based on the usage property, ambient environment and corresponding standards of the building. A conventional interior design procedure includes stages of preparation for design, scheme design, construction drawings design and implementation of design. Such a design method is labor consuming and with long design cycles, allowing very few options for customs to select for themselves, and produces effect drawings with limited perspectives. Therefore, in order to overcome the deficiencies in the conventional interior design method, there is currently a demand for a fast-implemented and three-dimensional interior design method.

### SUMMARY

A method for quickly implementing an interior design scheme is developed by the present invention. In the present invention, a designing area is divided into and set as functional areas according to a type of a room, and a prototype room is designed according to each type of design style, and in three sizes, i.e. small, medium and large sizes, thereby, the prototype room may be easily adjusted and further presented in three-dimensional stereo. Meantime, in the present invention, by utilizing a cloud platform, prototype rooms with different styles by designers may be transformed into function language and calculation formulas and transmitted to the cloud platform, and may be synchronized to easily-implemented software of any hypostatic store in any place across the world. Then, in a hypostatic store, according to a type of a room of a customer, after sizes and positions of functional areas are adjusted, the scheme may be immediately presented in three-dimensional stereo effect by a computer.

The technical solutions provided by the present invention are as follows.

A method for quickly implementing an interior design scheme, including:
step 1) design of a prototype room, wherein, a room is divided into and set as functional areas depending on a type of a room, and each of the functional areas is designed in three sizes, that is, a large size, a medium size and a small size, and is designed with a design style by designers;
step 2) a prototype room designed by each designer, forming manners of the functional areas and recording manners are all performed in an easily-implemented system, according to an easily-implemented protocol and rule and recorded and formed in an easily-implemented computer description language, functions and formulas;
step 3) the designed prototype room is transformed into computer description language and formulas, and transmitted to a cloud platform, and synchronized to software of any hypostatic store in any place across the world; and
step 4) in a hypostatic store, sizes of the functional areas are adjusted, positions of the functional areas are arranged and a prototype room is selected according to a type of the room, functions and formulas of a previously designed prototype room scheme are transformed into a three-dimensional stereo and presented immediately by a computer.

Preferably, the dividing and setting a room into functional areas refers to modularizing, processing and designing each designing area of the prototype room, to facilitate operations in adjusting a prototype room scheme.

Preferably, the designing the functional areas in three sizes, that is, a large size, a medium size and a small size, and with a same style, and forming a whole set of design scheme, to meet needs of different customs.

Preferably, after a prototype room of each design style is transformed into language, functions and formulas and transmitted to a cloud, and after sizes of the functional areas are adjusted, positions of the functional areas are arranged in a hypostatic store, a three-dimensional stereo effect is immediately presented.

Preferably, the presenting the three-dimensional stereo is performed by a calculation method of presenting an overall three-dimensional stereo effect of modularized functional areas by a computer; when a user selects a prototype room of a design style (or a serial number thereof), the prototype room of the design style is quickly calculated and transformed into a stereo presentation of a designer style by the computer; and when he selects another prototype room of another design style, it also be calculated and transformed into another three-dimensional stereo presentation of another style by software.

In the present invention, a designing area is divided into and set as functional areas according to a type of a room, and a prototype room is designed according to each type of design style, and in three sizes, i.e. small, medium and large sizes, thereby, the prototype room may be easily adjusted and further presented in three-dimensional stereo. Meantime, in the present invention, by utilizing a cloud platform, prototype rooms with different styles by designers may be transformed into function language and calculation formulas and transmitted to the cloud platform, and may be synchronized to easily-implemented software of any hypostatic store in any place across the world. Then, in a hypostatic store, according to a type of a room, by adjusting sizes and positions of functional areas and selecting a prototype room, functions and formulas of a design scheme of the prototype room designed previously are transformed and presented in three-dimensional stereo by a computer. When a user selects another name (or a serial number) of a prototype room of a design style, the prototype room of the design style is quickly calculated and transformed into a stereo presentation of a designer style by the computer. Upon a prototype room of another style being selected, it will be transformed and presented in three-dimensional stereo of another style by fast calculation of software. When used in a situation where different products need to be presented in different design styles and presented immediately in stereo, this function may bring about a revolutionary change.

### BRIEF DESCRIPTION OF THE DRAWINGS

Figure 1 a schematic structure view showing a designed prototype room in a method according to an embodiment of the present invention;
Figure 2 is a flow chart showing transmitting a prototype room to respective hypostatic stores in a method of the present invention;
Figure 3 is a schematic view showing dividing and setting into functional areas according to a type of a room in a method according to an embodiment of the present invention;
Figure 4 is a schematic view showing implementing a prototype room of a design style into a presentation of a three-dimensional stereo in a method of the present invention;
Figure 5 is a schematic view showing a sofa area of a living room in three sizes, that is, a small size, a medium size and a large size, in a method according to an embodiment of the present invention;
Figure 6 is a flow chart showing showing implementing a prototype room of a design style into a presentation of a three-dimensional stereo in a method of the present invention;
Figure 7 is a schematic view showing comparison between the method of the present invention and a conventional method;
Figure 8 is a schematic structure view showing a second embodiment of the present invention;
Figure 9 is a schematic structure view showing a third embodiment of the present invention; and
Figure 10 is a schematic view showing a fast replacement of a prototype room style according to embodiments of the present invention.

### DETAILED DESCRIPTION

Hereinafter, the present invention is further described in detail in conjunction with accompany drawings, to enable those skilled in the art to practice the invention with reference to the contents of the description.

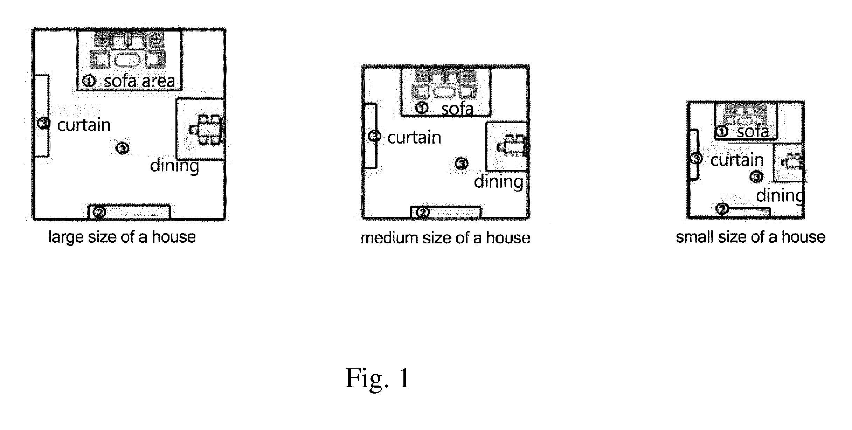

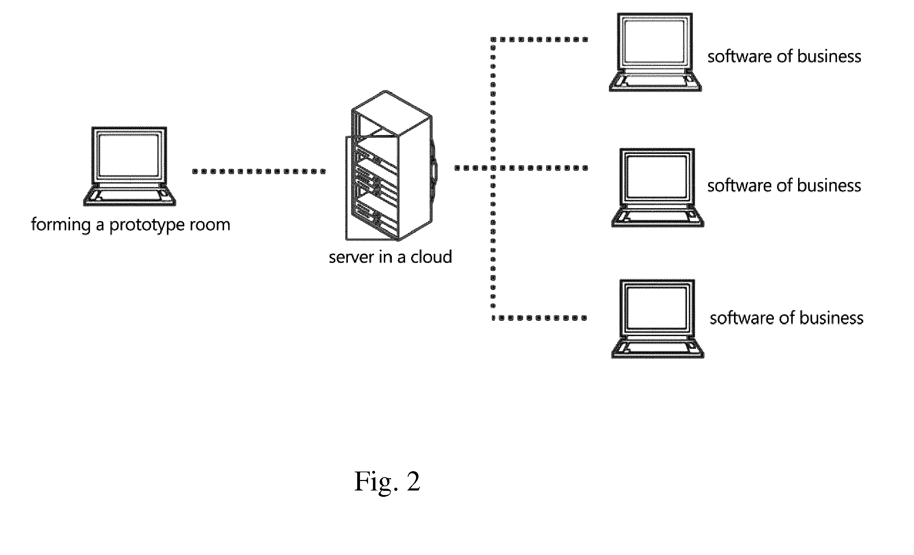

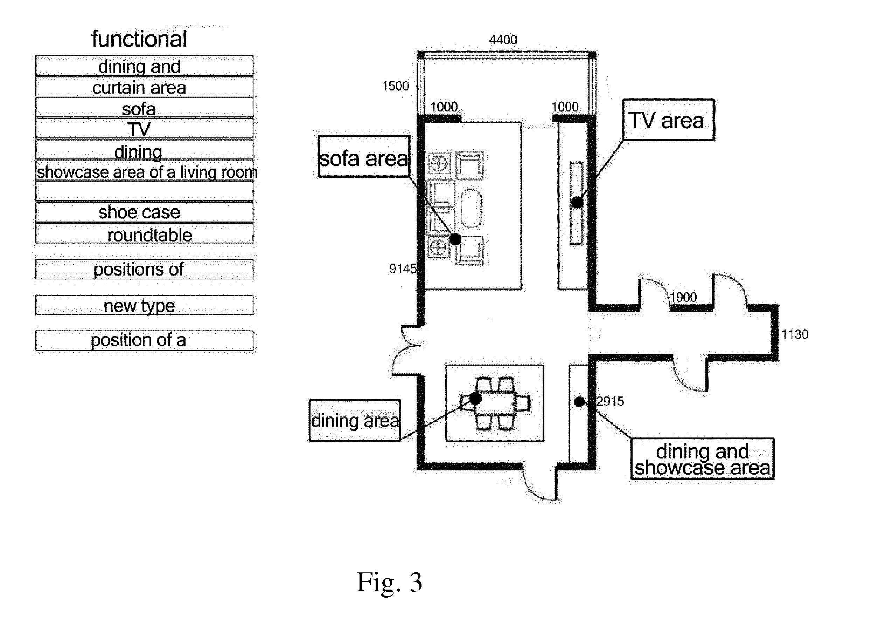

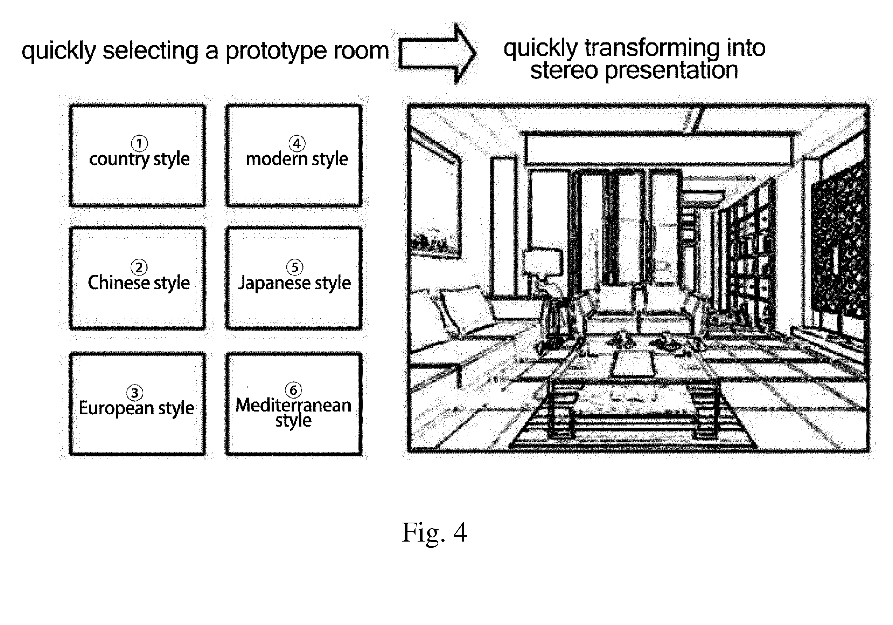

A method for quickly implementing an interior design scheme is provided by the present invention, including:
step 1) design of a prototype room, wherein, a room is divided into and set as functional areas according to a type of a room, and each of the functional areas is designed in three sizes, that is, a large size, a medium size and a small size, and is designed with a design style by a designer, as shown in Figure 1;
step 2) a prototype room designed by each designer, forming manners of the functional areas and recording manners are all performed in an easily-implemented system, according to an easily-implemented protocol and rule and recorded and formed in an easily-implemented computer description language, functions and formulas;
step 3) the designed prototype room is transformed into computer description language and formulas, and transmitted to a cloud platform, and synchronized to software of any hypostatic store in any place across the world, as shown in Figure 2; and
step 4) in a hypostatic store, sizes of the functional areas are adjusted, positions of the functional areas are arranged and a prototype room is selected according to a type of the room, functions and formulas of a previously designed prototype room scheme are transformed into a three-dimensional stereo and presented immediately by a computer, as shown in Figure 3 and Figure 4.

In the above step 1), design of each prototype room includes four parts, i.e. a type of the room, functional areas in the room, large, medium and small sizes of the functional areas in the room, and a design style of designers. Wherein, rooms may be categorized into living rooms, bath rooms, bedrooms, kitchens, offices, hotels, restaurants, shopping malls and KTV rooms.

Each of the rooms is divided into and set as functional areas correspondingly, as follows:
(1) a living room: ① a dining and showcase area ② a curtain area ③ a sofa area ④ a TV area ⑤ a dining area ⑥ an entrance area ⑦ a shoe case area ⑧ a roundtable area
(2) a bath room: ① a decorated area of a bath room ② a basin area ③ a closestool area ④ a shower area ⑤ a bathtub area
(3) a bedroom: ① a bed area ② a wardrobe area ③ a curtain area ④ a recreation area
(4) a kitchen: ① a small decorated area of a kitchen ② a medium decorated area of a kitchen ③ a large decorated area of a kitchen
(5) an office: ① a reception area ② a lounge area ③ a meeting area ④ an integrated office area ⑤ a machine room ⑥ a storage area ⑦ a pantry room
(6) a hotel lobby: ① an entrance lobby area ② a reception area ③ a dining area ④ a recreation area ⑤ a waiting area ⑥ a bar area ⑦ an elevator waiting area ⑧ a decorated area of a hotel
(7) a restaurant: ① an entrance lobby area ② a cashier's area ③ a waiting area ④ a booth area ⑤ a roundtable area ⑥ a box area ⑦ an aisle area ⑧ a wine bar area ⑨ a rest room area
(8) a shopping mall ①an entrance lobby area ② a cashier's area ③ a recreation area ④ an elevator area ⑤ a showcase area ⑥ an activity area ⑦ a wine bar area ⑧ a dessert bar area
(9) a KTV room: ①an entrance lobby area ② a reception area ③ a recreation area ④ an elevator area ⑤ an aisle area ⑥a wine bar area

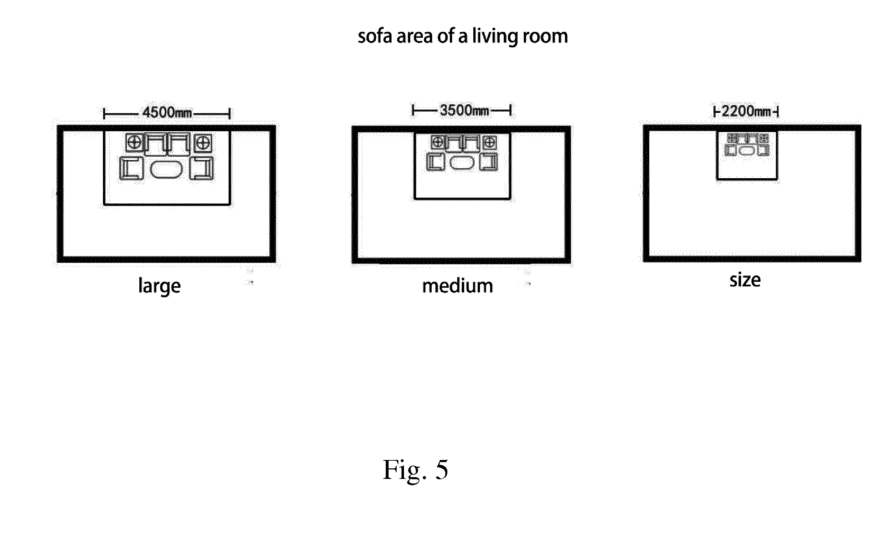

Referring to Figure 5, which shows in a room, a sofa area as a functional area of a living room is set with small, medium and large sizes. A design style of each prototype room is modularized into a design module. A design module is a data recordation in computer description language and as formulas of functions, and when the design module is put into a room of a custom, a three-dimensional stereo design scheme will be presented immediately through internal calculation.

### A First Embodiment

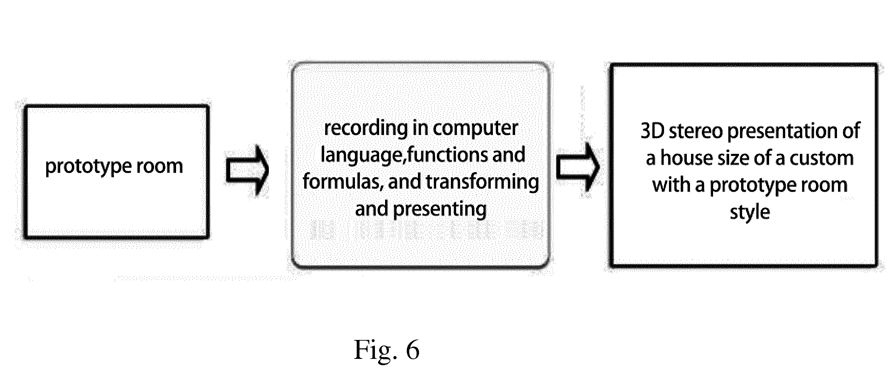

In a prototype room, a living room has functional areas in small, medium and large sizes, such as a dining and showcase area, a curtain area, a sofa area, a TV area, a dining area, an entrance area, a shoe case area and a roundtable area. Design styles by designers include combinations of designs for walls and a floor pattern, each of the design styles concerning each functional area has three sizes, that is, a small size, a medium size and a large size. When a custom comes to a hypostatic store, and decides one of the three sizes, i.e. a small size, a medium size and a large size, for each functional area in a living room according to the size of the house, and decides a position to put each functional area, and a selected style. As shown in Figure 6, a three-dimensional stereo effect will be presented immediately through calculation of the selected prototype room. Upon selecting another style for the prototype room by the user, the software will quickly calculate and transform to another style of the prototype room in a three-dimensional stereo, and present it.

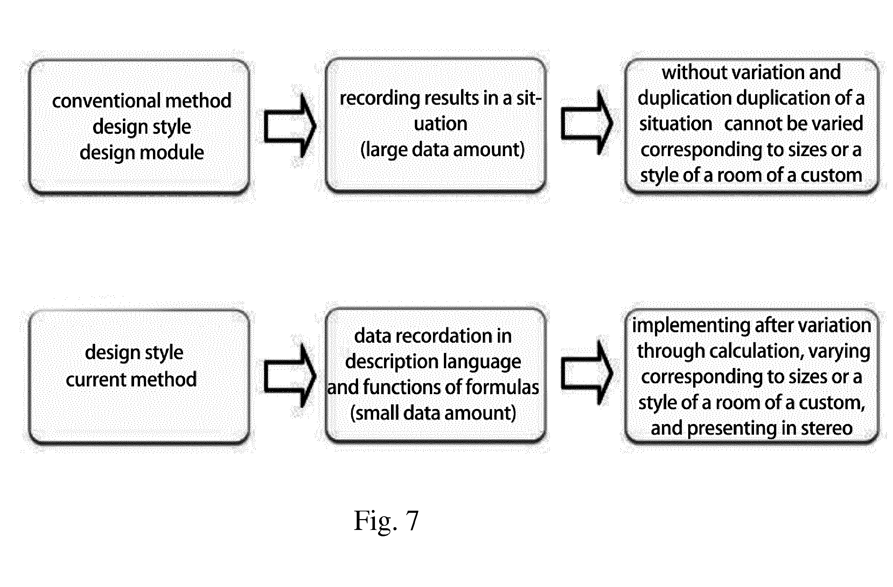

As shown in Figure 7, through this method, data recordation in computer description language and as formulas of functions of a design scheme of a prototype room is called, data amount to be saved for a design scheme or a design module is small in comparison with the conventional design method.

### A Second Embodiment

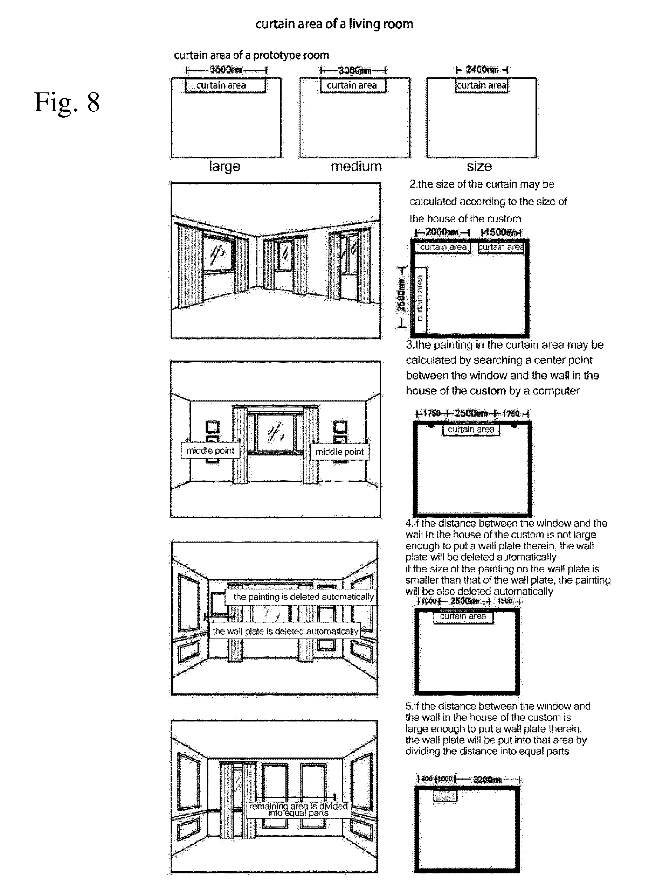

As shown in Figure 8, in a prototype room of the present invention, a curtain area setting of a living room has three sizes, i.e., a small size, a medium size and a large size, and each design style concerning the curtain area setting of the living room has three sizes, i.e., a small size, a medium size and a large size. In a design module of the curtain area, relationships between the curtain and a window, between the curtain and a painting, and between the curtain and a wall plate are recorded. When a custom adopts the curtain area of the prototype room in a living room, the size of the curtain will vary according to the size of the window in the room of the custom by a computer; the size of the painting in the curtain area is calculated by finding the center between the window to the wall in the room of the custom by the computer; and the size of the wall plate is also calculated according to the distance between the window and the wall. When a custom comes to a hypostatic store, and decides one of the three sizes, i.e. a small size, a medium size and a large size, for a curtain area of a living room according to the size of the house, and decides a position to put the curtain area, and a selected style, then put the selected prototype room in the house of the custom, and calls a design module of the curtain area of the living room, a three-dimensional stereo effect will be immediately presented through calculation. Through this method, data recordation in computer description language and as formulas of functions of a design scheme of a prototype room is called, data amount to be saved for a design scheme or a design module is small in comparison with the conventional design method.

### A Third Embodiment

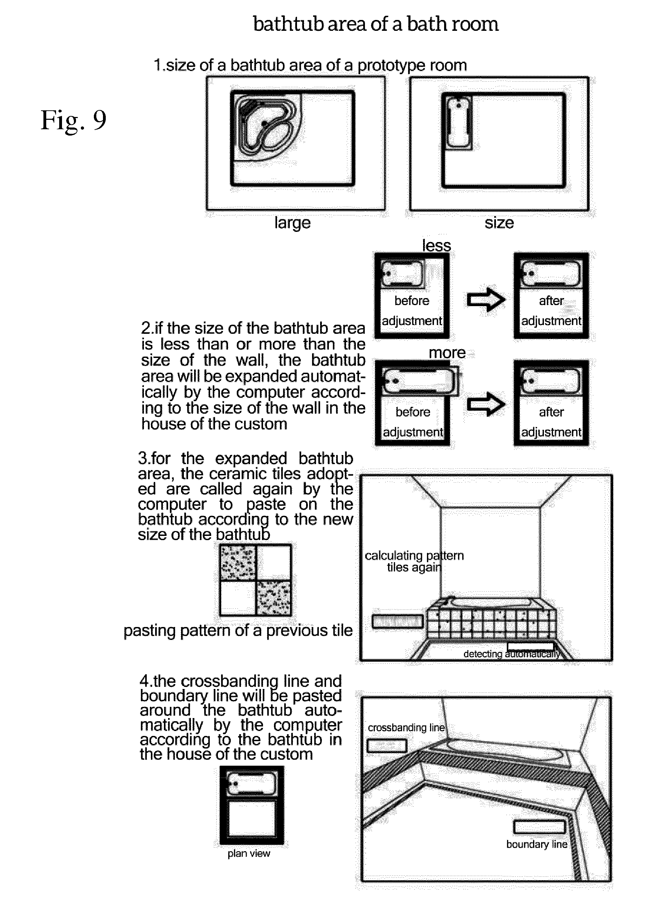

Referring to Figure 9, in a prototype room of the present invention, a bathtub area setting of a bath room has three sizes, i.e., a small size, a medium size and a large size, and each design style concerning the bathtub area setting of the bath room has three sizes, i.e., a small size, a medium size and a large size. In a design module of the bathtub area, the name of the bathtub, a serial number of pattern tiles to be pasted, and the name of the ceramic tiles adopted are recorded. When the functional area of the prototype room is adopted in the bathroom of the customer, the size of the bathtub may be expanded or reduced automatically according to the description language of the design scheme. After the size of the bathtub is expanded, the ceramic tiles adopted are called according to formulas of functions by a computer, and pasted on the bathtub. When a custom comes to a hypostatic store, and decides one of the three sizes, i.e. a small size, a medium size and a large size, for the bathtub area of the bath room according to the size of the house, and decides a position to put the bathtub area, and a selected style, then put the selected prototype room in the house of the custom, and calls a design module of the sofa area of the bath room, a three-dimensional stereo effect will be immediately presented through calculation. Also, prototype rooms with different design styles by designers are quickly transformed between design styles for the same room of the custom by calling data recordation in computer description language and as formulas of functions. During replacement of a design style, data concerning a functional area may be adjusted automatically.

By setting functional areas, designing a prototype room, modularizing the functional areas, data amount to be saved is made small. Upon a custom selecting a functional area according to the size of his house, an effect can be quickly presented.

In the present invention, a designing area is divided into and set as functional areas according to a type of a room, and a prototype room is designed according to each type of design style, and in three sizes, i.e. small, medium and large sizes, thereby, the prototype room may be easily adjusted and further presented in three-dimensional stereo. Meantime, in the present invention, by utilizing a cloud platform, prototype rooms with different styles by designers and new prototype rooms as modified by customs from the prototype rooms on the cloud platform may be transmitted to the cloud platform, and may be synchronized to easily-implemented software of any hypostatic store in any place across the world. Then, in a hypostatic store, according to a type of a room, by adjusting sizes and positions of functional areas and selecting a prototype room, functions and formulas of a design scheme of the prototype room designed previously are transformed and presented in three-dimensional stereo by a computer. Upon a prototype room of another style being selected, it will be transformed and presented in three-dimensional stereo of another style by fast calculation of software. When used in a situation where different products need to be presented in different design styles and presented immediately in stereo, this function may bring about a revolutionary change.

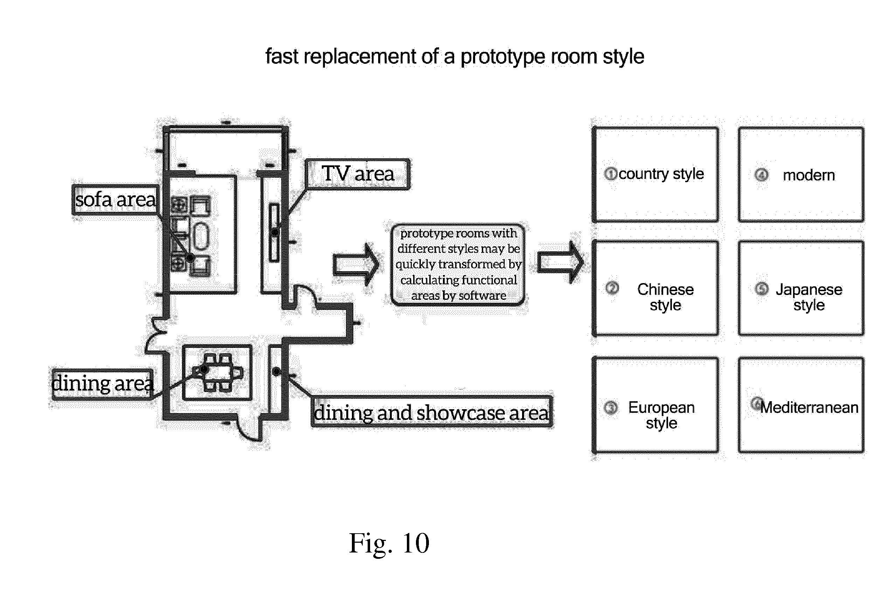

Figure 10 is a schematic view showing a fast replacement of a prototype room style according to embodiments of the present invention.

Although the embodiments of the present invention have been disclosed as above, they are not limited merely to those set forth in the description and the embodiments, and they may be applied to various fields suitable for the present invention. For those skilled in the art, other modifications may be easily modified realized without departing from the general concept defined by the claims and their equivalents, and the present invention does not limit to the particular details and drawings illustrated and described herein.

## Claims

1. A method for quickly implementing an interior design scheme, **characterized in that**, the method comprises:
step 1) design of a prototype room, dividing and setting a room into functional areas according to a type of a room, designing each of the functional areas in three sizes, that is, a large size, a medium size and a small size, and with a design style by a designer;
step 2) designing a prototype room by each designer, forming the functional areas and recording them in an easily-implemented system, according to an easily-implemented protocol and rule, and in an easily-implemented computer description language, functions and formulas;
step 3) transforming the designed prototype room into computer description language and formulas, and transferring it to a cloud platform, and synchronizing it to software of any hypostatic store in any place across the world; and
step 4) in a hypostatic store, adjusting sizes of the functional areas, arranging positions of the functional areas and selecting a prototype room according to the type of the room, and transforming functions and formulas of a previously designed prototype room scheme into a three-dimensional stereo and presenting the three-dimensional stereo immediately by a computer.

2. The method for quickly implementing an interior design scheme of claim 1, **characterized in that**, the dividing and setting a room into functional areas refers to modularizing, processing and designing each designing area of the prototype room, to facilitate operations in adjusting a prototype room scheme.

3. The method for quickly implementing an interior design scheme of claim 1, **characterized in that**, the designing the functional areas in three sizes, that is, a large size, a medium size and a small size, and with a same style, and forming a whole set of design scheme, to meet needs of different customs.

4. The method for quickly implementing an interior design scheme of claim 1, **characterized in that**, after a prototype room of each design style is transformed into language, functions and formulas and transmitted to a cloud, and after sizes of the functional areas are adjusted, positions of the functional areas are arranged in a hypostatic store, a three-dimensional stereo effect is immediately presented.

5. The method for quickly implementing an interior design scheme of claim 1, **characterized in that**, the presenting the three-dimensional stereo is performed by a calculation method of presenting an overall three-dimensional stereo effect of modularized functional areas by a computer; when a user selects a prototype room of a design style or a serial number thereof, the prototype room of the design style is quickly calculated and transformed into a stereo presentation of a designer style by the computer; and when he selects another prototype room of another design style, it also be calculated and transformed into another three-dimensional stereo presentation of another style by software.
